# EUROPÄISCHE PATENTANMELDUNG

(11) **EP 4 368 680 A1**
(43) Veröffentlichungstag der Anmeldung: **15.05.2024**
(21) Anmeldenummer: 23200619.7
(22) Anmeldetag: 28.09.2023
(51) Int. Cl.: C09J 7/21, C09J 7/26

(54) **FUGENDICHTBAND UND VERFAHREN ZU DESSEN HERSTELLUNG**

(30) Priorität: 09.11.2022 DE 102022129553
(71) Anmelder: Tremco CPG Germany GmbH, 92439 Bodenwöhr (DE)
(72) Erfinder: Schiano, Peter, 73431 Aalen (DE); Wörmann, Frank, 59192 Bergkamen (DE); Tenbuß, Stefan, 42659 Solingen (DE); Komma, Markus, 93133 Burglengenfeld (DE)
(74) Vertreter: Bittner, Bernhard

(57) **Zusammenfassung**

Als Dichtbandrolle konfektioniertes Dichtband (10), insbesondere Fugendichtband mit einem Trägerstreifen (2) aus Schaumstoff, wobei der Trägerstreifen sich in einer Längenrichtung, einer zu der Längenrichtung senkrecht stehenden Breitenrichtung und einer zu der Längenrichtung und der Breitenrichtung senkrecht stehenden Dickenrichtung erstreckt, mit einer auf einer Oberfläche des Schaumstoffträgers, welche sich in der Längenrichtung (L) und der Breitenrichtung (B) angeordneten Klebeschicht (4) und einem auf dieser Klebeschicht (4) angeordneten Abdeckstreifen (6), dadurch gekennzeichnet, dass eine Klebekraft der an dem Schaumstoffträger angeordneten Klebeschicht gegenüber Kunststoff und insbesondere gegenüber PVC größer ist als 10N.

## Beschreibung

Die vorliegende Erfindung bezieht sich auf ein Dichtband und insbesondere ein Fugendichtband. Derartige Fugendichtbänder sind aus dem Stand der Technik seit langem bekannt. Diese weisen üblicherweise einen Schaumstoffstreifen auf, der sich in einer abzudichtenden Fuge ausdehnt und auf diese Weise diese Fuge abdichtet.

Derartige Fugendichtbänder sollten auf bestimmte abzudichtende Fugen bzw. die angrenzenden Materialien abgestimmt sein.

Der vorliegenden Erfindung liegt die Aufgabe zugrunde, ein Fugendichtband zur Verfügung zu stellen, welches im Einsatz dauerhaft an den jeweiligen Grenzflächen anliegt, bzw. anhaftet. Dabei sollte dieses Fugendichtband insbesondere auch für Kunststoffe eine ausreichende Haftkraft aufweisen. Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Ein erfindungsgemäßes, als Dichtbandrolle konfektioniertes Dichtband, insbesondere ein Fugendichtband, weist einen Trägerstreifen aus Schaumstoff auf, wobei der Trägerstreifen sich in einer Längenrichtung, einer zu der Längenrichtung senkrecht stehenden Breitenrichtung und einer zu der Längenrichtung und der Breitenrichtung senkrecht stehenden Dickenrichtung erstreckt. Dabei sind diese Richtungen insbesondere unter Bezugnahme auf einen abgerollten und sich geradlinig erstreckenden Streifen definiert.

Weiterhin ist auf einer Oberfläche des Schaumstoffträgers, welche sich in der Längenrichtung und der Breitenrichtung erstreckt, eine Klebeschicht angeordnet und auf dieser Klebeschicht ist wiederum ein Abdeckstreifen (insbesondere ein sog. Liner) angeordnet.

Erfindungsgemäß ist eine Klebkraft der an dem Schaumstoffträger angeordneten Klebeschicht gegenüber Kunststoff und insbesondere gegenüber PVC größer als 10 N.

Besonders bevorzugt besteht die Klebeschicht aus einem Acrylatklebstoff.

Bevorzugt ist die Klebekraft der Klebeschicht an dem Schaumstoffträger höher als die Klebekraft der Klebeschicht an dem Abdeckstreifen. Bevorzugt ist die Klebekraft der Klebeschicht an dem Schaumstoffträger wenigstens 1,5 mal so groß wie die Klebekraft der Klebeschicht an dem Abdeckstreifen, bevorzugt wenigstens 2mal so groß, bevorzugt wenigstens 3mal so groß und bevorzugt wenigstens 4 mal so groß.

Besonders bevorzugt ist die Klebeschicht vollflächig auf der Oberfläche des Schaumstoffträgers angebracht. Es wäre jedoch auch möglich, dass die Klebeschicht streifenartig oder in einer anderen Art und Weise unterbrochen angebracht ist.

Besonders bevorzugt weist die Abdeckschicht im Wesentlichen die gleichen Längen- und Breitenabmessungen wie der Trägerstreifen auf. Besonders bevorzugt ist die Abdeckschicht aus einem Silikonpapier hergestellt. Es wäre aber auch denkbar, dass die Abdeckschicht aus PP oder einem anderen Kunststoff hergestellt ist.

Besonders bevorzugt handelt es sich bei dem Schaumstoff um einen UV-beständigen Schaumstoff.

Besonders bevorzugt weist der Schaumstoffträger eine Länge auf, die größer ist als 2 m, bevorzugt größer ist als 3 m und bevorzugt größer als 3,5 m.

Besonders bevorzugt weist der Schaumstoffträger eine Länge auf, die kleiner ist als 30 m, bevorzugt kleiner als 20 m, bevorzugt kleiner als 15 m, bevorzugt kleiner als 10 m, bevorzugt kleiner als 8 m.

Bei einer weiteren bevorzugten Ausführungsform weist das Dichtband eine Breite auf, die größer ist als 2 mm, bevorzugt größer als 4 mm, bevorzugt größer als 6 mm, bevorzugt größer als 8 mm, bevorzugt größer als 10 mm.

Besonders bevorzugt weist das Dichtband eine Breite auf, die geringer ist als 150 mm, bevorzugt geringer als 100 mm, bevorzugt geringer als 80 mm, bevorzugt geringer als 60 mm und besonders bevorzugt geringer als 50 mm.

Besonders bevorzugt ist eine Wärmeleitfähigkeit des Dichtbandes und/oder des Schaumstoffträgers gem. DIN IN 12667 größer als 0,02 W/mk, bevorzugt größer als 0,03 W/mk, bevorzugt größer als 0,04 W/mk. Besonders bevorzugt ist Wärmeleitfähigkeit kleiner als 0,1 W/mk, bevorzugt kleiner als 0,08 W/mk, bevorzugt kleiner als 0,06 W/mk und besonders bevorzugt kleiner ist als 0,05 W/mk.

Besonders bevorzugt ist ein SD-Wert des Schaumstoffträgers kleiner als 1 m, bevorzugt kleiner als 0,8 m, bevorzugt kleiner als 0,7 m, bevorzugt kleiner als 0,6 m, bevorzugt kleiner als 0,5 m. und bevorzugt kleiner als 0,3 m.

Besonders bevorzugt ist die Klebekraft bezogen auf einen Schaumstoffträger mit einer Breite von 25 mm und/der einem Abziehwinkel zwischen 80° und 100°, bevorzugt zwischen 85° und 95° und besonders bevorzugt bei ca. 90°.

Bei einer weiteren vorteilhaften Ausführungsform liegt bei der Bestimmung der Klebekraft eine Zeit zwischen dem Anbringen der Klebeschicht bei der Referenzmessung an dem PVC (und/oder Kunststoff) und dem Abziehen bei mehr als 4 min, bevorzugt größer als 6 min, bevorzugt mehr als 8 min und bevorzugt mehr als 9 min.

Besonders bevorzugt beträgt eine Zeit zwischen der Anbringung der Klebeschicht am PVC (und/oder dem Kunststoff) und dem Abziehen weniger als 30 min, bevorzugt weniger als 25 min, bevorzugt weniger als 20 min, bevorzugt weniger als 15 min und bevorzugt weniger als 12 min.

Es wird daher ein Dichtband vorgeschlagen, welches insbesondere für die Anbringung an Kunststoff und insbesondere die Anbringung an PVC optimiert ist.

Bei einem entsprechenden Messverfahren wird besonders bevorzugt der Schaumstoffträger und/oder der Klebstoff an PVC (insbesondere einen Träger aus PVC und/oder mit einer PVC Oberfläche) angepresst, insbesondere mit einer Rolle. Besonders bevorzugt wird dabei eine Rolle mit einer Masse von 5 kg verwendet. Nach dem Anbringen des Schaumstoffträgers an dem PVC wird, wie oben erwähnt, idealerweise 10 min gewartet und dann der Schaumstoffträger in einer senkrechten oder 90° Richtung abgezogen und dabei die entstehende Kraft gemessen. Diese Kraft liegt dann insbesondere in dem angegebenen Bereich über 10N.

Besonders bevorzugt wird hierbei mit einer Prüfgeschwindigkeit von 200 mm/min gemessen. Dies bedeutet, dass der Schaumstoffträger mit dieser Geschwindigkeit von 200 mm/min von dem PVC-Träger abgezogen wird.

Besonders bevorzugt ist die Klebekraft der an dem Schaumstoffträger angeordneten Klebeschicht gegenüber PVC kleiner als 30 N, bevorzugt kleiner als 25 N, bevorzugt kleiner als 22 N und besonders bevorzugt kleiner als 20 N. Besonders bevorzugt ist die Klebekraft wie oben erwähnt größer als 10 N, bevorzugt größer als 12 N und bevorzugt größer als 15 N.

Diese Bereiche der Kraft haben sich in umfangreichen Experimenten als besonders günstig erwiesen, um einerseits einen sicheren Halt des Dichtbandes am Baukörper zu erreichen und andererseits ein kostengünstiges Produkt zu ermöglichen.

Bei einer weiteren bevorzugten Ausführungsform ist der Schaumstoffträger aus einem PU-Schaumstoff und insbesondere aus einem imprägnierten PU-Schaumstoff hergestellt. Die Imprägnierung erfolgt bevorzugt, um eine verzögerte Rückstellung des Schaumstoffes zu erreichen.

So kann die Rückstellung etwa derart verzögert sein, dass beispielsweise bei der Rückstellung 30% der gesamten Höhe, bzw. Schaumstoffhöhe nach frühestens 3, bevorzugt frühestens 4 und bevorzugt frühestens 5min erreicht werden.

Weiterhin kann die Rückstellung etwa derart verzögert sein, dass beispielsweise bei der Rückstellung 30% der gesamten Höhe, bzw. Schaumstoffhöhe nach spätestens 12h, bevorzugt spätestens 8h und bevorzugt spätestens 4h erreicht werden.

Bevorzugt ist das Imprägniermittel, mit welchem der Schaumstoffträger imprägniert ist und/oder wird, aus einer Gruppe von Imprägniermitteln ausgewählt, welche Acrylatdispersionen, Flammschutzmittel und/oder Füllstoff (beispielsweise Kreide, Aluminiumhydroxid, und/oder Marmorpulver) und dergleichen enthält.

Besonders bevorzugt weist der Schaumstoff ein Raumgewicht auf, welches in einem nicht imprägnierten Zustand größer ist als 20 kg/m³, bevorzugt größer als 25 kg/m³. Besonders bevorzugt weist der Schaumstoff in einem nicht imprägnierten Zustand ein Raumgewicht auf, welches kleiner ist als 80 kg/m³, bevorzugt kleiner als 70 kg/m³, bevorzugt kleiner als 60kg/m³, bevorzugt kleiner als 50 kg/m³ und besonders bevorzugt kleiner als 40 kg/m³. Bevorzugt bewirkt das Imprägnat eine Raumgewichtszunahme um mehr als 10 kg/m³, bevorzugt mehr als 20 kg/m³ und bevorzugt mehr als 30 kg/m³. Besonders bewirkt das Imprägnat ein Raumgewichtszunahme, welche kleiner ist als 300 kg/m³, bevorzugt kleiner als 200 kg/m³ und besonders bevorzugt kleiner als 100 kg/m³.

Bei einer weiteren vorteilhaften Ausführungsform weist der Schaumstoffträger in der Dickenrichtung in einem rückgestellten Zustand eine Dicke auf, die kleiner ist als 20 cm, bevorzugt kleiner als 15 cm, bevorzugt kleiner als 12 cm und bevorzugt kleiner als 10 cm.

Bei einer weiteren vorteilhaften Ausführungsform weist der Schaumstoffträger in der Dickenrichtung in einem rückgestellten Zustand eine Dicke auf, die größer ist als 0,2 cm, bevorzugt größer ist als 0,5 cm, bevorzugt größer als 0,6 cm, bevorzugt größer als 0,8 cm und bevorzugt größer als 1,0 cm.

Bei einer weiteren bevorzugten Ausführungsform weist der Schaumstoff eine graue Farbe auf und insbesondere eine Farbe in der Kategorie RAL classic. Besonders bevorzugt ist ein Farbton des Schaumstoffs aus einer Gruppe von Farbtönen ausgewählt, welche die Farbtöne RAL 7000, RAL 7001, RAL 7002 ... RAL 7047 und RAL 7048 enthält.

Besonders ist die Klebeschicht derart ausgebildet, dass sie dazu geeignet ist, unmittelbar an einem Klinkermaterial befestigt werden zu können. Auf diese Weise kann bei einem Einsatz eines entsprechenden Dichtbandes an einer Baustelle Zeit eingespart werden, weil beispielsweise auf ein genau exaktes Einmessen verzichtet werden kann.

Bei einer weiteren vorteilhaften Ausführungsform ist (in der Dickenrichtung) zwischen dem Schaumstoffträger und dem Abdeckstreifen ein Gelege und insbesondere ein Glas oder Glasfaser enthaltendes Gelege angeordnet. Dabei kann dieses Gelege netzartig ausgebildet sein.

In einer weiteren bevorzugten Ausführungsform kontaktiert dabei dieses Gelege weder den Schaumstoff noch den Abdeckstreifen. In einer weiteren bevorzugten Ausführungsform kontaktiert das Gelege entweder den Schaumstoff oder den Abdeckstreifen.

Besonders bevorzugt ist das Gelege wenigstens teilweise und bevorzugt vollständig in die Klebeschicht eingebettet. Durch dieses Gelege kann insgesamt die Stabilität des Dichtbandes erhöht werden.

Bei einer weiteren vorteilhaften Ausführungsform ist ein Flächengewicht des Klebstoffs größer als 70 g/m², bevorzugt größer als 90 g/m², bevorzugt größer als 100 g/m², bevorzugt größer als 120 g/m². Bei einer weiteren vorteilhaften Ausführungsform ist ein Flächengewicht des Klebstoffs kleiner als 300 g/m², bevorzugt kleiner als 250 g/m², bevorzugt kleiner als 220 g/m2.

Bei einer weiteren vorteilhaften Ausführungsform weist die Klebeschicht eine Dicke auf, die zwischen 0,05mm und 0,3mm liegt.

Besonders bevorzugt weist der Abdeckstreifen ein Flächengewicht auf, welches größer ist als 30 g/m², bevorzugt größer als 40 g/m², bevorzugt größer als 50 g/m² und bevorzugt größer als 60 g/m².

Bei einer weiteren vorteilhaften Ausführungsform weist der Abdeckstreifen ein Flächengewicht auf, welches geringer ist als 180 g/m², bevorzugt geringer als 150 g/m², bevorzugt geringer als 100 g/m² und besonders bevorzugt als 80 g/m².

Die vorliegende Erfindung ist weiterhin auf ein Verfahren zur Herstellung eines Dichtbandes und insbesondere eines Dichtbands der oben beschriebenen Art gerichtet.

Dabei wird in einem ersten Schritt ein Schaumstoffträger zur Verfügung gestellt, wobei der Schaumstoffträger bevorzugt in Form einer Schaumstoffrolle zur Verfügung gestellt wird und der Schaumstoff sich in einem abgerollten Zustand in einer Längenrichtung (L), einer zu der Längenrichtung senkrecht stehenden Breitenrichtung (B) und in einer zu der Längenrichtung (L) und der Breitenrichtung senkrecht stehenden Dickenrichtung (D) erstreckt.

In einem weiteren Verfahrensschritt wird eine Klebeschicht sowie eine Abdeckschicht an einer Oberfläche des Schaumstoffträgers, welche sich in der Längenrichtung und der Breitenrichtung erstreckt, angebracht.

Erfindungsgemäß ist eine Klebekraft der an dem Schaumstoffträger angeordneten Klebeschicht gegenüber Kunststoff und insbesondere gegenüber PVC größer als 10N.

Bevorzugt werden die Klebeschicht und die Abdeckschicht derart an dem Schaumstoffträger angeordnet, dass die Klebeschicht zwischen der Abdeckschicht und dem Schaumstoffträger angeordnet ist.

Bei einem weiteren bevorzugten Verfahren ist oder wird der Schaumstoffträger imprägniert, wobei diese Imprägnierung insbesondere zur verzögerten Rückstellung erfolgt.

Bei einem weiteren vorteilhaften Verfahren wird ein Verbund aus dem Schaumstoffträger mit der daran angeordneten Klebeschicht und der an der Klebeschicht angeordneten Abdeckschicht zu einer Rolle aufgerollt.

Bevorzugt werden von dieser Rolle Dichtbandrollen abgeschnitten.

Bevorzugt werden die Klebeschicht und der Abdeckstreifen als Verbund dem Schaumstoffträger zugeführt und an diesem angeordnet. wobei dieser Verbund bevorzugt von einer Rolle abgewickelt wird.

Bei einem weiteren bevorzugten Verfahren wird in die Klebeschicht ein Gelege eingebracht.

Dabei kann dieses Einbringen des Geleges bereits im Vorfeld der Herstellung der Dichtbandrolle erfolgen und insbesondere bevor ein Verbund aus der Klebeschicht und der Abdeckschicht aufgerollt wird.

Weiterhin kann dieses Einbringen des Geleges in die Klebeschicht mittels einer anderen Anlage erfolgen als das Anbringen des Verbundes aus der Klebeschicht und der Abdeckschicht an dem Schaumstoff.

Bei einem weiteren bevorzugten Verfahren ist ein Zeitraum zwischen dem Einbringen des Geleges in die Klebeschicht und dem Anbringen des Verbundes aus der Klebeschicht und der Abdeckschicht größer als 24 Stunden, bevorzugt größer als 72Stunden und bevorzugt größer als 5 Tage. Auf diese Weise kann erreicht werden, dass sich das Gelege gegenüber der Klebeschicht ausreichen stabilisiert hat.

Bevorzugt erfolgt ein Anbringen des Verbundes bei einer Temperatur, die größer ist als -10°C, bevorzugt größer als -5°C und bevorzugt größer als 0°C. Bevorzugt erfolgt ein Anbringen des Verbundes bei einer Temperatur, die kleiner ist als 100°C, bevorzugt kleiner als 80°C, bevorzugt kleiner als 60°C und bevorzugt kleiner als 40°C.

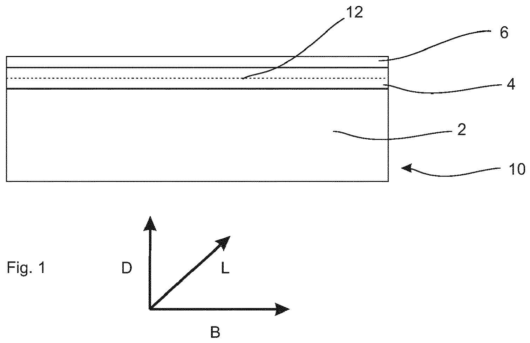

Weitere Vorteile und Ausführungsformen ergeben sich aus der beigefügten Zeichnung. Dabei zeigt
- Fig. 1: eine schematische Darstellung eines Dichtbandes in einem abgerollten Zustand.

Fig. 1 zeigt eine schematische Darstellung eine von einer Dichtbandrolle abgerollten Dichtbandes 10. Dieses Dichtband erstreckt sich in einer Längenrichtung L, welche hier senkrecht zur Figurenebene verläuft, einer Breitenrichtung B und einer Dickenrichtung D.

Das Bezugszeichen 2 kennzeichnet einen Schaumstoffträger. Dieser ist hier aus einem zur verzögerten Rückstellung imprägnierten Schaumstoff gebildet. An diesem Schaumstoffträger ist eine Klebeschicht 4 angeordnet und an dieser Klebeschicht 4 wiederum ein Abdeckstreifen bzw. Liner 6.

In die Klebeschicht 4 kann ein Gelege 12 eingebracht sein. Bevorzugt sind die Klebeschicht 4 mit dem darin angeordneten Gelege 12 und die daran angeordnete Abdeckschicht 6 als Verbund ausgebildet, der im Rahmen der Herstellung als Ganzes an dem Schaumstoffträger angebracht wird.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Als Dichtbandrolle konfektioniertes Dichtband (10), insbesondere Fugendichtband mit einem Trägerstreifen (2) aus Schaumstoff, wobei der Trägerstreifen sich in einer Längenrichtung, einer zu der Längenrichtung senkrecht stehenden Breitenrichtung und einer zu der Längenrichtung und der Breitenrichtung senkrecht stehenden Dickenrichtung erstreckt, mit einer auf einer Oberfläche des Schaumstoffträgers, welche sich in der Längenrichtung (L) und der Breitenrichtung (B) angeordneten Klebeschicht (4) und einem auf dieser Klebeschicht (4) angeordneten Abdeckstreifen (6),
**dadurch gekennzeichnet, dass**
eine Klebekraft der an dem Schaumstoffträger angeordneten Klebeschicht gegenüber Kunststoff und insbesondere gegenüber PVC größer ist als 10N.

2. Dichtband nach Anspruch 1,
**dadurch gekennzeichnet, dass**
die Klebekraft bezogen ist auf einen Schaumstoffträger mit einer Breite von 25mm und/oder einen Abziehwinkel von zwischen 80° und 100°.

3. Dichtband (10) nach wenigstens einem der vorangegangenen Ansprüche,
**dadurch gekennzeichnet, dass**
die Klebekraft der an dem Schaumstoffträger angeordneten Klebeschicht gegenüber PVC kleiner ist als 30N, bevorzugt kleiner als 25N, bevorzugt kleiner als 22N, bevorzugt kleiner als 20N.

4. Dichtband (10) nach wenigstens einem der vorangegangenen Ansprüche,
**dadurch gekennzeichnet, dass**
der Schaumstoffträger aus einem PU Schaumstoff und insbesondere aus einem imprägnierten PU - Schaumstoff besteht.

5. Dichtband (10) nach wenigstens einem der vorangegangenen Ansprüche,
**dadurch gekennzeichnet, dass**
der Schaumstoffträger in der Dickenrichtung in einem rückgestellten Zustand eine Dicke aufweist, die kleiner ist als die kleiner ist als 20 cm, bevorzugt kleiner als 15 cm, bevorzugt kleiner als 12 cm und bevorzugt kleiner als 10cm und/oder der Schaumstoffträger in der Dickenrichtung in einem rückgestellten Zustand eine Dicke aufweist, die größer ist als die größer ist als 0,2 cm, bevorzugt größer ist als 0,5 cm, bevorzugt größer als 0,6 cm, bevorzugt größer als 0,8 cm und bevorzugt größer als 1,0 cm.

6. Dichtband (10) nach wenigstens einem der vorangegangenen Ansprüche,
**dadurch gekennzeichnet, dass**
zwischen dem Schaumstoffträger und dem Abdeckstreifen ein Gelege (12) und insbesondere ein Glas enthaltendes Gelege (12) angeordnet ist.

7. Dichtband (10) nach dem vorhergehenden Anspruch,
**dadurch gekennzeichnet, dass**
das Gelege wenigstens teilweise und bevorzugt vollständig in die Klebeschicht eingebettet ist.

8. Dichtband (10) nach wenigstens einem der vorangegangenen Ansprüche,
**dadurch gekennzeichnet, dass**
ein Flächengewicht des Klebstoffes größer ist als 70g/m², bevorzugt größer als 90 g/m², bevorzugt größer als 100 g/m², bevorzugt größer als 120 g/m² und/oder ein Flächengewicht des Klebstoffes kleiner ist als 300 g/m², bevorzugt kleiner als 250 g/m², bevorzugt kleiner als 220 g/m².

9. Dichtband (10) nach wenigstens einem der vorangegangenen Ansprüche,
**dadurch gekennzeichnet, dass**
die Klebeschicht eine Dicke aufweist, die zwischen 0,05mm und 0,3mm liegt.

10. Dichtband (10) nach wenigstens einem der vorangegangenen Ansprüche,
**dadurch gekennzeichnet, dass**
der Abdeckstreifen (6) ein Flächengewicht aufweist, welches größer ist als 30 g/m², bevorzugt größer als 40 g/m², und bevorzugt größer als g/m² und/oder der Abdeckstreifen (6) ein Flächengewicht aufweist, welches geringer ist als 100 g/m², bevorzugt geringer als 80 g/m², bevorzugt geringer als 70 g/m² und bevorzugt geringer als 60 g/m².

11. Verfahren zur Herstellung eines Dichtbandes mit den Schritten:
- zur Verfügung stellen eines Schaumstoffträgers , wobei der Schaumstoffträger bevorzugt in Form einer Schaumstoffrolle zur Verfügung gestellt wird und der Schaumstoff sich in einem abgerollten Zustand in einer Längenrichtung (L), einer zu der Längenrichtung senkrecht stehenden Breitenrichtung (B) und in einer zu der Längenrichtung (L) und der Breitenrichtung senkrecht stehenden Dickenrichtung (D) erstreckt;
- Anbringen einer Klebeschicht sowie einer Abdeckschicht (6) an einer Oberfläche des Schaumstoffträgers (2), welche sich in der Längenrichtung (L) und der Breitenrichtung erstreckt,
**dadurch gekennzeichnet, dass**
eine Klebekraft der an dem Schaumstoffträger angeordneten Klebeschicht gegenüber Kunststoff und insbesondere gegenüber PVC größer ist als 10N.

12. Verfahren nach Anspruch 11,
**dadurch gekennzeichnet, dass**
der Schaumstoffträger imprägniert ist oder imprägniert wird, wobei diese Imprägnierung insbesondere zur verzögerten Rückstellung erfolgt.

13. Verfahren nach wenigstens einem der vorangegangenen Ansprüche,
**dadurch gekennzeichnet, dass**
der Verbund aus dem Schaumstoffträger mit der daran angeordneten Klebeschicht und dem an der Klebeschicht angeordneten Abdeckschicht zu einer Rolle aufgerollt wird.

14. Verfahren nach wenigstens einem der vorangegangenen Ansprüche,
**dadurch gekennzeichnet, dass**
die Klebeschicht und der Abdeckstreifen als Verbund dem Schaumstoffträger zugeführt und an diesem angeordnet werden, wobei dieser Verbund bevorzugt von einer Rolle abgewickelt wird.

15. Verfahren nach wenigstens einem der vorangegangenen Ansprüche,
**dadurch gekennzeichnet, dass**
in die Klebeschicht ein Gelege eingebracht wird.
